# EUROPEAN PATENT APPLICATION

(11) **EP 3 041 227 A1**
(43) Date of publication of application: **06.07.2016**
(21) Application number: 13892459.2
(22) Date of filing: 26.08.2013
(51) Int. Cl.: H04N 7/18

(54) **DEVICE FOR MONITORING AREA AROUND WORKING MACHINE**

(71) Applicant: Hitachi Construction Machinery Co., Ltd., Bunkyo-ku Tokyo 112-8563 (JP)
(72) Inventor: ISHIMOTO, Hidefumi, Tsuchiura-shi Ibaraki 300-0013 (JP); OOTA, Moritaka, Tsuchiura-shi Ibaraki 300-0013 (JP); KOWATARI, Yoichi, Tsuchiura-shi Ibaraki 300-0013 (JP); INANOBE, Yoshihiro, Tsuchiura-shi Ibaraki 300-0013 (JP)
(74) Representative: Beetz & Partner mbB
(86) International application number: PCT/JP2013/072731
(87) International publication number: WO 2015/029110

(57) **Abstract**

For monitoring around working machine having a working member connected to a swiveling structure rotatably mounted on a traveling structure, to perform working by the operation of the working member which comprises, plural number of cameras installed for the swiveling structure, so as to overlap the view field of adjacent two cameras partially with each other, a view point convertor for converting view point of camera images acquired by respective cameras to upper view point images, a display image creator to create an overhead view image composed of an illustration of the working machine as plane view, and the upper view point images converted from the converting view point convertor disposed around the illustration, and an image display device configured to show the overhead view image prepared by the display image creator in the form of a plane view at least within a working reach region to reach the working member for performing work by the working member.

## Description

### Field of the Invention

The present invention relates to a device for monitoring around a working machine for ensuring safety or the like to perform works by the working machine, such as a hydraulic excavator.

### Description of the Background Art

An example of the working machine, such as the hydraulic excavator comprises a traveling structure at a lower side and a swiveling structure at an upper side which is connected by a rotating device. The swiveling structure has a working member to perform works such as excavating earth and sand, the working member being consisting of a boom connecting to the swiveling structure so as to perform swing up and down, and an arm connected to the top end of the boom for rotating up and down direction, further a bucket being connected to the fore end of the arm by means of a link mechanism as an attachment to perform excavating work of earth and sand and the like. These members consist of a multi-articulated front working member.

It is conventionally known that an automotive working machine, such as the above-mentioned hydraulic excavator, is provided with an peripheral monitoring apparatus for observing the situation around the swiveling structure. The peripheral monitoring apparatus comprises a camera or cameras mounted on the swiveling structure, and a monitor device provided at forward position of operator's seat in the operator's cab. Image acquired by the camera is displayed on the monitor screen as moving image.

In this connection, the camera is mounted stationary on the swiveling structure and has a limited field of view. As a matter of course, the field of view is required for the forward direction to the subject of working, in addition rearward and, the left and right side directions are also to be entered into the field of view for ensuring safety of traveling or working. It is conventionally known that plural number of cameras are mounted on the swiveling structure to attain the field of view for broader area. Thereby, the peripheral of the swiveling structure can be reduced blind area substantially, thus improving to secure the safety of the working and to ensure operability of the working machine.

There is disclosed in Patent document 1 or others as to processing a view point conversion to upper view point of images acquired by the plural cameras which are provided around the working machine, and the processed planar surveillance images displayed on a monitor screen. For the sake of attaining the peripheral surveillance images, plural cameras are disposed around a hydraulic excavator as the working machine to display on the monitor screen by composing the thus attained images of respective cameras. Three cameras are provided at the rearward position, and left and right side positions respectively of the hydraulic excavator, these cameras being directed the optical axis of the objective lens toward inclined downwardly. For the sake of surveillance purpose, processing to convert the view point is performed to a through image as the image before signal processing. The view point to be converted is a upper view point, thus available three overhead view point image view projected from upper position.

The overhead view point image thus attained is displayed on the monitor screen, at the same time an illustration picture symbolized the hydraulic excavator (specifically, a plane view of the hydraulic excavator) is also indicated on the monitor screen, wherein these overhead view images attained by respective cameras being positioned around the illustration picture. More specifically, an overhead view image for the surveillance of peripherals is prepared to show the illustration picture in the center position of the monitor screen, and the overhead view images of the rearward direction, and the left and right side directions of the illustration pictures are arranged around it.

### Prior Art Document

### Patent Document

Patent Publication JP 2008-114814A1

### Summary of the Invention

### Problem to be solved by the Invention

An operator who operates the hydraulic excavator can recognize the peripheral situation of the working machine accurately by showing the foregoing overhead view image on the monitor screen, thus ensuring the safety of the working by performing surveillance of peripherals, by reviewing the monitor screen at the time operation, such as excavating earth and sand, loading the excavated substance to a dump truck as a transportation means, and traveling the hydraulic excavator. Thus, the overhead view image shown on the monitor screen is extremely profitable to ensure safety of the works. In order to attain wide range of view field with small number cameras, the cameras for use are to have wide viewing angle. However, a through image acquired from a camera having wide angle lens becomes distorted in a form of substantially spherical shape, which tends to display the deformed image which is largest in the nearest position to the camera, then becoming continuously smaller toward distal end, and toward left side and right side directions. Therefore, in a case where these through image is directly converted the view point as it is, the displayed image is shaped generally spherical or substantially spherical configuration.

Therefore, displayed image processed as overhead view image is not reproduced precisely due to generating distortion toward the distance direction and angular direction. The peripheral surveillance has an object to confirm whether or not there is any stationary or movable obstacle (working vehicles, workers and the like) to avoid from contact, the peripheral surveillance per se does not encountered significant difficulty, even though being bared distortion on the image more or less.

For example, a hydraulic excavator as the working machine performs a series of works repeatedly, on a working field at a mine or the like, to excavate earth and sand, ore or the like by a bucket, to rotate the swiveling structure, further to load the excavated substances on a vessel of a dump truck which is positioned near the hydraulic excavator. In addition, the hydraulic excavator shift the position toward the next excavating work autonomously for the sake of changing the excavating field.

In order to perform the foregoing works, to control for positioning the bucket to the excavating position, and for positioning precisely the bucket above the vessel is extremely important for the accuracy of work and the improvement of work efficiency. Since image of the hydraulic excavator and around there is displayed on the monitor display, it is helpful to make reviewing of the monitor screen for use in improving the work efficiency, in addition to safety conformation. However, if the monitor screen is displayed distorted image in the working field as described hereinbefore, the operator to perform the working may feel uneasy in operation control, thus being encountered rather difficulty in accuracy for the working.

The present invention is accomplished in light of the foregoing aspects, and the object of the present invention is to improve usability for precisely and efficiently in improving working efficiency by exploiting a monitor screen which is provided for confirmation for safety of peripheral situation.

### Means for Solving the Problem

In order to solve the foregoing problem, device for monitoring around working machine of the present invention having a working member connected to a swiveling structure rotatably mounted on a traveling structure, to perform working by the operation of the working member which comprises: plural number of cameras installed for the swiveling structure, so as to overlap the view field of adjacent two cameras partially with each other; a view point convertor for converting view point of camera images acquired by respective cameras to upper view point images; a display image creator to create an overhead view image composed of an illustration of the working machine as plane view, and the upper view point images converted from the converting view point convertor disposed around the illustration; and an image display device configured to show the overhead view image prepared by the display image creator in the form of a plane view at least within a working reach region to reach the working member for performing work by the working member.

The image display device shows the overhead view image consisting of the illustration picture of the working machine in the form of plane view, and plane view for upper view point images respectively converted the view point of respective cameras disposed around the illustration, thereby being adapted to make surveillance around the working machine by showing the overhead view image. The surveillance around the working machine is performed for the sake of safety confirmation to prevent contact or collide various parts with peripheral substance, then resulting to fall into inoperable state during the operation of the working machine.

The overhead view image is also utilized for the sake of improving operability to ensure the certainty and facility of the working member, further to secure accurate and efficient operation. From the view point of operability, it is necessary to precisely recognize the relative position of the working member to the target to be worked. A working machine such as a hydraulic excavator performs of operation to excavate by means of the bucket consisting of a working member, and then to load the excavated substance on dump truck or the like, so that the display shows to precisely recognize the relative position between the excavating place and the position of the bucket, and also positioning of the bucket relative to the dump truck for performing the efficient and certain operation in the facilitated manner.

The overhead view image is the image which is converted the view point from images acquired from plural cameras installed around the working machine. The cameras are preferably provided four positions respectively, at forward, left and right sides, and rearward positions of the working machine. These cameras are placed on approximately intermediate positions of the front side, left side, right side and rear side of the working machine at a level as high as possible. Further, these cameras are arranged at approximately same or similar height level. Since various members may be placed everywhere in the working machine, these cameras cannot be necessarily placed at the same height, anyway cameras being arranged preferably to an even level as much as possible. Also, the direction to the view field is inclined downwardly.

Through images can be acquired from respective cameras provided around working machine. These through images are images which are directed the optical axis inclined downwardly. The view point convertor performs to transform the view point of the through images to the upper view point images, thereby acquired images being plane view images projected on a virtual plane with approximately parallel lines. The plane view image is not to have entire extent of the image but is limited to the working area by the working member. That is, the plane view area is limited from a minimum reach position of the working member to a maximum reach position. As for area remote from the maximum reach position, spherical view image can be shown in place of plane view image. The spherical view image is able to stand a wide monitoring area in a limited monitor screen. However, the spherical view image should have a quality to recognize the presence of an obstacle and the like on the displayed image.

As explained before, an area within the working member adapted to reach is defined as inside working region of monitoring area can be differentiated from outside region of monitoring area in their view point, thereby ensuring to improve the working efficiency and to expand the monitoring area. In this connection, the outside region of monitoring area is not working area of the working member, but has a function to confirm the presence of any substance, accordingly the distortion in the image being allowable more or less. Rather, it is preferred to expand display image area as wide as possible. Thus, an second view point is settled for the image outside of the maximum reach region which is different from the working region of monitoring area. Therefore, in a case where the virtual view point is settled for plane view image as a main virtual view point position, the view image of outside region from the maximum reach area brings the view point nearer than the main virtual view point position and views from inclined direction.

The overhead view image is displayed to arrange side by side around the illustration picture of the working machine. In this connection, the illustration picture is positioned center in the monitor display and respective plane view images may be allocated around it approximately uniformly, but in some cases the illustration picture being allowed to shift the position toward longitudinal or horizontal direction. The displayed size of the plane view image on the forward side of the image area may be enlarged, while reduced the size on the rear side, or vice versa displayed size for the rear side of the plane view image being enlarged. The image within the working area by the working machine may be displayed large in size as widely as possible, thereby improving the efficiency of excavation. On the contrary, the rearward monitoring can be performed more precisely, by enlarging the rear side plane view image. Further, the illustration picture may be shifted the position toward left or right according to the nature of work.

### Effects of the Invention

The display image shown on the image display device is adapted to make sure the safety around the working machine, and further to assure the improvement of the working efficiency.

### Brief Description of the Drawings

[Fig. 1] is a diagrammatic perspective view of a hydraulic excavator as an example of a working machine.
[Fig. 2] is a side elevational view of Fig. 1.
[Fig. 3] is explanatory view for imaging areas taken by four cameras mounted on the hydraulic excavator.
[Fig. 4] is a schematic view of an overhead view image.
[Fig. 5] is an explanatory view for trimming respective plane view images to display the overhead view image on an image display device.
[Fig. 6] is a block diagram for illustrating to create and display the overhead view image.
[Fig. 7] is an explanatory views showing images before and after performing correction of distortion by means of image processing.
[Fig. 8] is an explanatory view showing trimming area of a plane view image transformed from a through image attained by a side camera to a plane view image.
[Fig. 9] is a flowchart of signal processing for showing an image on a monitor screen acquired image by a camera.
[Fig. 10] is an explanatory view showing an image which is differentiated the view point between within maximum reach region and outside reach monitoring region.
[Fig. 11] is an another type schematic view of an overhead view image.

### Embodiment of the Invention

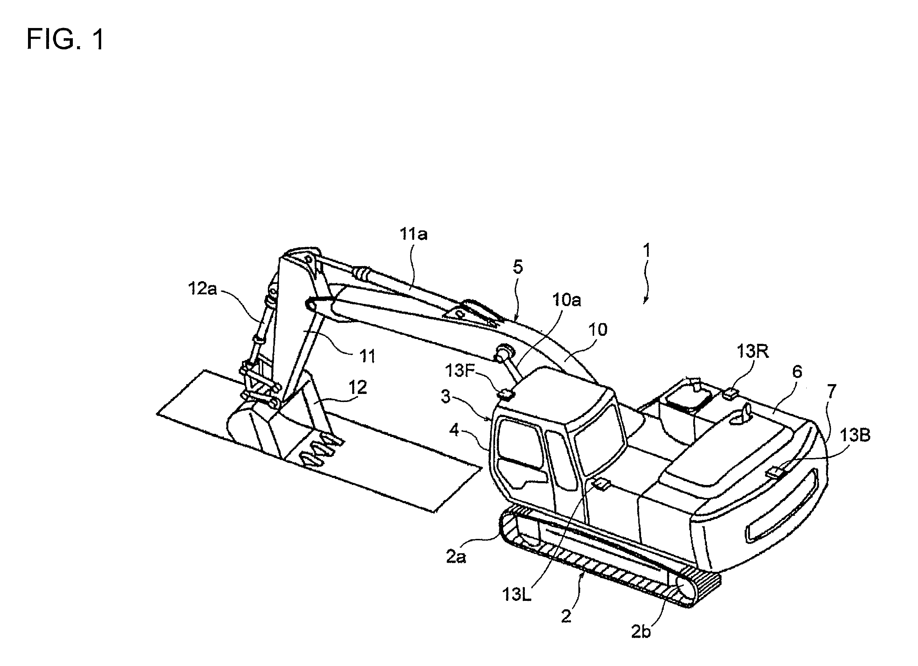

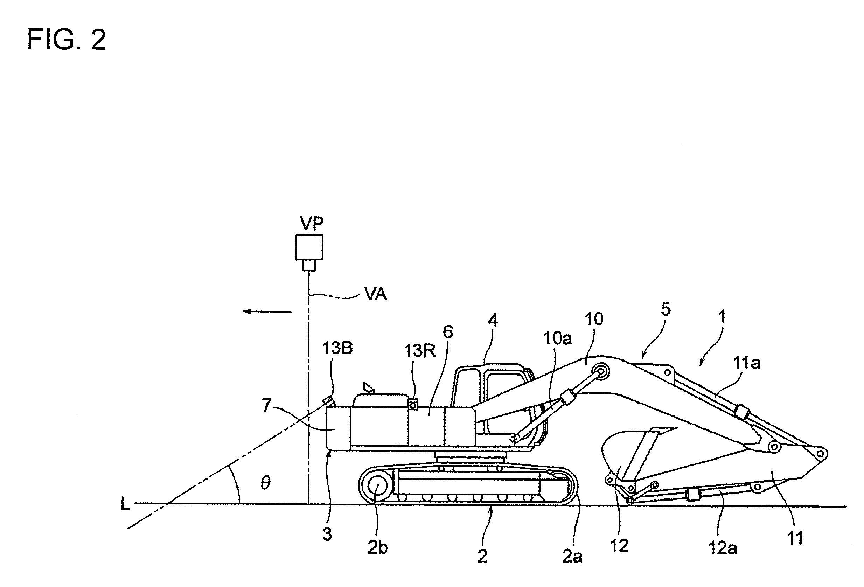

Hereafter, embodiments of the present invention will be described with reference to the attached drawings. In Fig. 1 and Fig. 2, an hydraulic excavator 1 is shown as an example of a working machine. In these drawings, the reference numeral 2 denotes a traveling structure having a crawler type traveling mechanism, the traveling structure 2 is rotatably connected to a swiveling structure 3. The traveling structure 2 has crawler 2a which is driven by sprocket 2b.

An operator's cab 4 is mounted on the swiveling structure 3, an operator being boarded in the operator's cab 4 for performing operation of the machine. A front working member 5 is positioned at the right side of the operator's cab 4 approximately with side by side relation. In addition, a machine housing 6 and the like are mounted on the swiveling structure 3 at the rear side, eventually a counterweight 7 being placed at rear end.

The front working member 5 is an excavation working member consisting of, as shown in the drawing, a boom 10, an arm 11 and a bucket 12 as an attachment. The boom 10 is pivotally connected with a pivot pin to the swiveling structure 3 adapted to make elevating motion. The arm 11 is connected to the tip end of the boom 10 adapted to make rotating motion, the bucket 12 being rotatably connected to the tip end of the arm 11. The elevating motion of the boom 10 is driven by a boom cylinder 10a. The arm 11 is driven by an arm cylinder 11a, further the bucket 12 being driven by a bucket cylinder 12a.

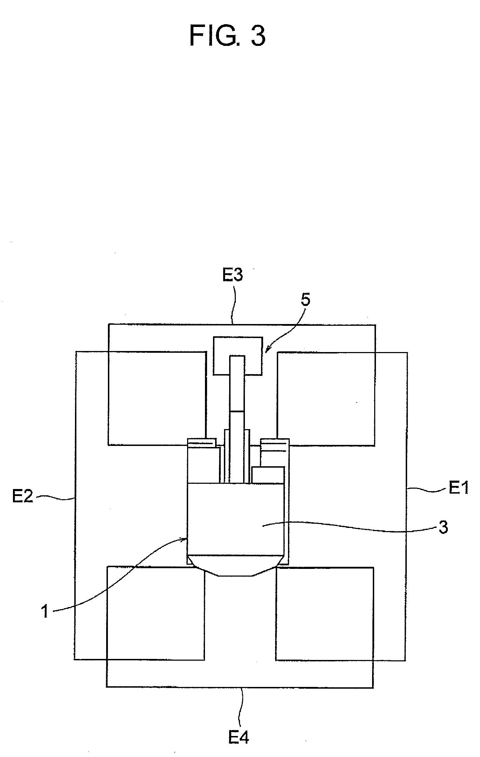

The hydraulic excavator 1 is provided video cameras for shooting moving image around the swiveling structure 3. In Fig. 1, 13F is a forward camera, 13B is a rearward camera, and 13L and 13R being a left and right side cameras. The monitoring around the hydraulic excavator 1 is performed by these cameras 13F, 13B, 13L and 13R. Respective shooting ranges of cameras 13F, 13B, 13L and 13R are shown in Fig. 3. Concerning images of cameras, camera images E1 and E2 acquired from the left and right side cameras 13L and 13R are partially overlapped on camera image E3 of the forward camera13F, and camera images E1 and E2 acquired from the left and right side cameras 13L and 13R are partially overlapped on camera image E4 of the rearward camera 13 B.

A monitor device 20 is provided in the operator's cab 4, as explained hereafter, the images acquired from the cameras 13F, 13B, 13L and 13R are displayed on a monitor screen 20a of the monitor device 20 in the form of moving images. In this connection, the images of the cameras 13F, 13B, 13L and 13R do not be displayed as the original through images, but virtual view point images transformed the upper view point by means of signal processing.

For example, the rearward camera 13B is directed the optical axis of an objective lens to rearward direction with inclined downwardly at an angle θ. When the ground to stand the traveling structure 2 of the hydraulic excavator is denoted as L, the acquired camera image has the angle θ to the ground L. The image is transformed to project on a virtual plane from a virtual view point VP with vertical optical axis in parallel with arrow projection line VA as shown in Fig. 2. Through images acquired from the cameras 13F, 13B, 13L and 13R are thus converted the view point to the virtual view point VF.

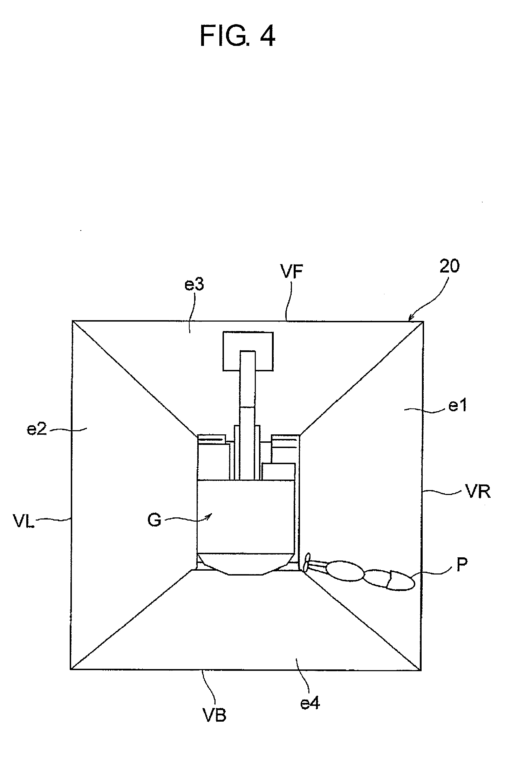

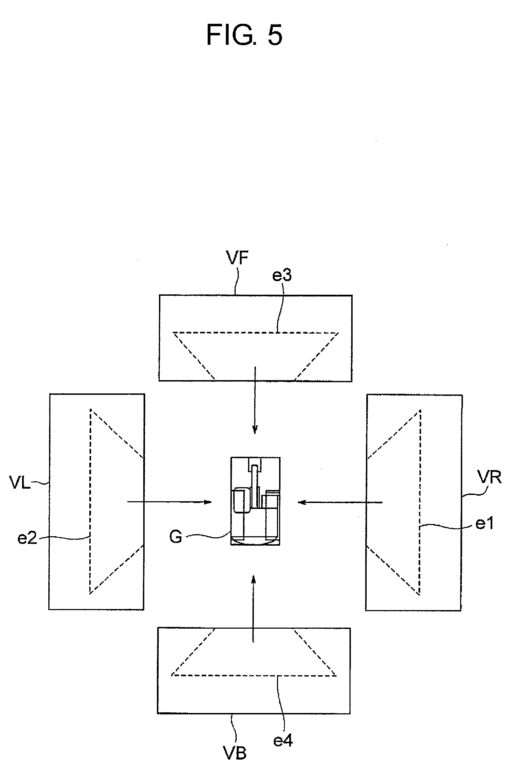

Plane view images VF, VB, VL and VR acquired by shooting of the cameras 13F, 13B, 13L and 13R are cut out necessary segments as shown dotted line in Fig. 4 to form segment images e1, e2, e3 and e4, thereby these segment images are shown on the monitor screen 20a of the monitor device 20. As shown in Fig. 5, the hydraulic excavator 1 as the working machine is shown at the center position on the monitor screen 20a in the form of an plane view as a symbolized illustration picture G, and the peripheral images of plane views VF, VB, VL and VR are arranged around the illustration picture G, thus being displayed a peripheral overhead view image. In this connection, the segment images e1, e2, e3 and e4 in the plane view images VF, VB, VL and VR are actually displayed on the monitor screen 20a. Also, the monitor screen 21 of Fig. 5 shows that a working person P is present. Since the overhead view image is acquired converted the view point from the four through images, the working person P appears to be squeezed form.

Since the monitor screen 20a shows the hydraulic excavator 1 looked down from upper position and plane view images around there, the situation around the hydraulic excavator 1 can be judged accurately by reviewing the monitor screen 20a. Although the working person P is shown as squeezed form, approximately precise plane view image can be reproduced almost even ground of excavating field without no irregularity.

The operation of typical works of the hydraulic excavator 1 performs sequentially to excavate ground by means of the working member, to accommodate the excavated substance into the bucket 12, and to transfer the substance to a transporting machine, such as a dump truck, and the series of works being repeatedly performed. Respective constituent members of the front working member 5 are operated for working and the swiveling structure 3 is rotated for performing the foregoing operation. Further, the hydraulic excavator 1 is adapted to travel by driving the traveling structure 2.

The operator performs the forgoing operation by controlling motion of the bucket 12 and the like, at this time, the image of the hydraulic excavator 1 and around thereof being shown as a plane view on the monitor screen 20a with safety, prompt and accurate manner for the sake of operation of excavation and loading the excavated substance to a dump truck advantageously.

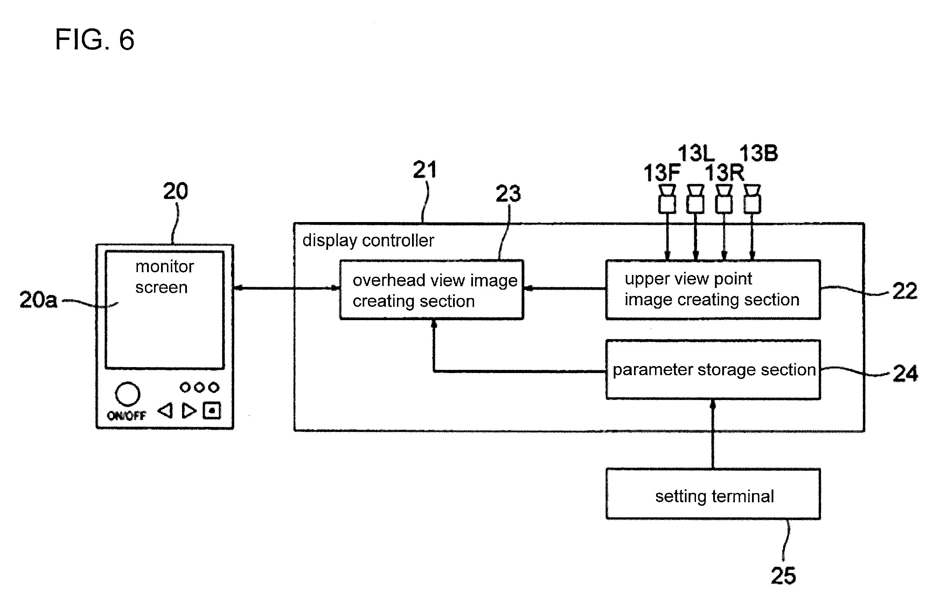

Fig. 6 shows the monitor device 20 and a block diagram of a display controller 21 for controlling the monitor device 20. The display controller 21 comprises an upper view point image creating section 22, an overhead view image creating section 23 and a parameter storage section 24, cameras 13F, 13B, 13L and 13R are connected with the upper view point image creating section 22. Plural number of through images acquired at the time of shooting by the cameras 13F, 13B, 13L and 13R are subjected to transform the view point by means of the upper view point image creating section 22 to the upper view point images or plane view images VF, VB, VL and VR.

The display controller 21 includes an image processing LSI or CPU, RAM, ROM, I/O interface and so forth to be required for processing an image, through images data sent by the cameras 13F, 13B, 13L and 13R are inputted to image memory devise, after correction processing to correct distortion caused by the lens and other processing, image transforming process being performed known plane view transforming projection processing by way of homography matrix, projection processing in three dimensional space, and the like.

The resulted image signal acquired in accordance with the above-mentioned processing comes into the four plane view image having, for example, 30 frame per second, these frame images of plane view being stored in a frame memory as composite signals such as NTSC or the like. The thus created the plane view images are arranged around a centrally positioned illustration picture G of the hydraulic excavator 1 in the overhead view image creating section 23. Further, the respective plane view images are cut out so as not to overlap each other for forming segment images e1, e2, e3 and e4 with boundary lines as shown in Fig. 4.

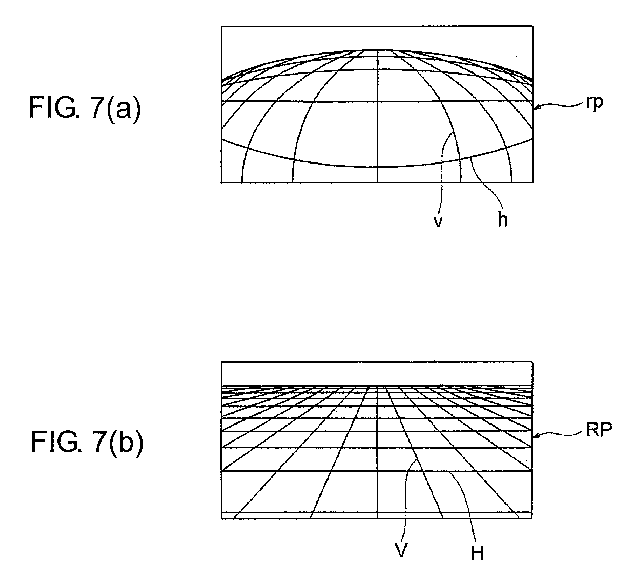

Since the cameras 13F, 13B, 13L and 13R are provided wide angle lens, acquired through image rp on shooting is schematically shown as Fig. 7(a). As shown, the coordinate axis h and v indicated in grid lines become deformed into a roundly expanded form. Distortion correction of lens the image shown in Fig. 7(a) is aimed to change to the linear form grid lines of coordinate axis H, V shown in Fig. 7(b). The image correction processing of lens distortion can be performed by means of a general coordinate transformation, such as utilizing a pixel converting table to provide corresponding relation between pre-transformation and post-transformation to respective pixel of the image data stored in an image memory.

Further, the parameter storage section 24 stores data concerning respective members consisting of the hydraulic excavator 1, and data concerning such as the positions and view fields of cameras 13F, 13B, 13L and 13R, in addition the parameter storage section 24 also stores data concerning the positions of respective plane view images VF, VB, VL, VR and the illustration picture G. Therefore, respective plane view images VF, VB, VL, VR are displayed on corresponding positions of the monitor screen 20a in accordance with the output from the parameter storage section 24. The respective parameters stored in the parameter storage section 24 can be set and changed by means of a setting terminal 25.

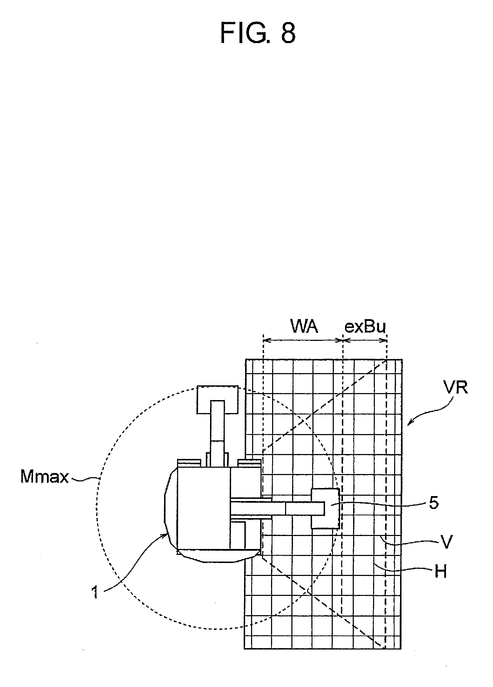

The plane view images VF, VB, VL, VR shown on the monitor screen 20a are acquired as illustrated in Fig. 8. Though the right side plane view image is explained as one example in Fig. 8, four plane view images VF, VB, VL, VR are prepared in the same manner. The hydraulic excavator 1 as a working machine has the swiveling structure 3 adapted to rotate 360 degree. Further, all cameras have the visual field of approximately 180 degree, respectively.

The plane view image VR displayed on the monitor screen 20a is deemed to be settled to have the range of 90 degree as indicated dot line shown in Fig. 8. Since the monitor screen 20a is utilized for the sake of surveillance, the tip end of the bucket 12 should be appeared within the image (within a circle indicated with dot line in the drawing), even though the maximum reach region Mmax of the front working member 5. The maximum reach region Mmax is defined as a boundary that the bucket 12 can reach at the time of maximum extended state of the front working member 5, then WA being the moving locus at the time of rotation of the swiveling structure 3.

As image for use in surveillance, it is preferred to show the image more broader area than the maximum reach region Mmax. Although the front working member 5 does not extend beyond the maximum reach region Mmax during the operation of the hydraulic excavator 1, movable substance such as working person, dump truck, service car and so on are present in the field of work under operation. The movable substance is possible to move within the area of the maximum reach region Mmax from outside. Therefore, the operator is necessary to recognize in advance the movable substance in a case where it is positioned close to the maximum reach region Mmax, even though outside thereof. For this purpose, an out of reach range surveillance zone exBu is established to include this exBu in the displayed image.

The maximum reach region Mmax is determined in consideration of peripheral safety monitoring, in addition, is useful for improvement of work by the operation of the front working member. To display contents of the monitor screen 20a, therefore, serves as extremely important function for the sake of making recognition of the operator, to judge to which position the bucket 12 should extend on operation of excavation by the front working member 5, to determine which angle the swiveling structure 3 should rotate in order to perform precise loading work of excavated substance on the dump truck and which position the bucket 12 should be placed after rotated posture.

Image processing including the plane view transforming projection processing is required to create image for improving operability as explained above. The area at least within the moving locus WA of the plane view image VR shown in Fig. 8 is subjected to image processing to convert the projection lines on the level plane from the upper view point into approximately parallel lines with uniform grid (H, V). Therefore, the operator of the hydraulic excavator 1 can operate the without unusual feeling and smooth manner by reviewing the movement of the bucket 12 on the monitor screen 20a.

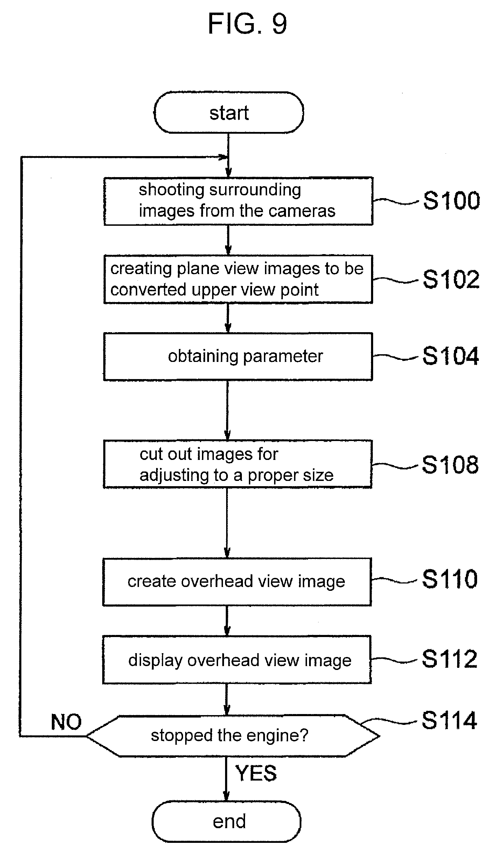

In the next place, the procedure for displaying the surveillance image on the monitor screen 20a of the monitor device 20 is explained with reference to Fig. 9. The monitor device 20 is mounted in the operator's cab 4 at a preferred position of easy visible from the operator boarded on the operator's seat for convenience of operation. The monitor screen 20a displays overhead view image at the time of start the hydraulic excavator 1. The display of the image on the monitor screen 20a may turn on automatically when the hydraulic excavator 1 is started, or otherwise the display is adapted to turn on by means of switch operation.

Upon initiating the operation of the monitoring device, four cameras 13F, 13B, 13L and 13R initiate image shooting (step S100). The peripheral images from the cameras 13F, 13B, 13L and 13R are received by the display controller 21 of the image processing apparatus (step 101), then the plane view images VF, VB, VL and VR being prepared by means of processing in the upper view point creating section 22 of the display controller 21 (step S102), further in accordance with the output of the parameter storage section 23 (step S104), the images being cut out for adjusting to a proper size for making display on the respective region of the monitor screen 20a (step S108). In the next place, the overhead view image is created by segment images e1, e2, e3 and e4 which are cut out from the plane view images VF, VB, VL and VR in overhead view image creating section 23 and the illustration picture G (step S110). Thus created overhead view image is displayed on the monitor screen 20a as moving image so that the moving image is reflected at the time of the movement of the hydraulic excavator 1 on swiveling action, and the operation of the front working member 5 (step S112). Such display continues as far as the engine being in operation, the display on the monitor screen 20a will be stopped at the time stopped the engine (step S114). While, it may be constructed that the operation of the display is controlled by the operator with a switch for the monitor device 20.

As explained before, the moving locus WA shown in Fig. 8 is the region defined by rotation locus of the swiveling structure 3 at the time of the maximum extended state of the front working member 5, on the stationary situation of the traveling structure 2 of the hydraulic excavator 1. The plane view images VF, VB, VL and VR are preferably to be displayed as wide as possible, for the sake of the operation by the operator. However, the image display area of the monitor screen 20a is limited. Further, the moving locus WA is shown throughout a range of 360 degree, in addition, an area out of reach range surveillance zone exBu is also shown in a certain range for confirming safety.

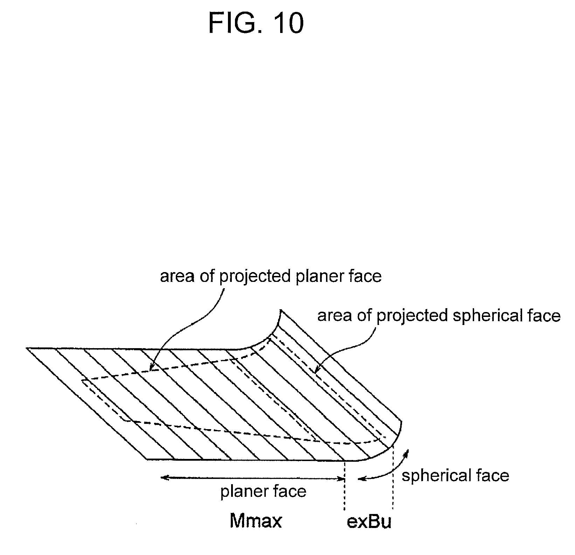

In view of the foregoing, as shown in Fig. 10, a plane view image is displayed in the maximum reach region Mmax as an area of the projection plane. Thereby, operation can be smoothly and certainly performed for excavation and loading of excavated substance to a dump truck by means of the front working member 5. In addition, the area out of reach range surveillance zone exBu is displayed in the form of concave shape in order to widely show the peripheral situation, even though presence of some distortion.

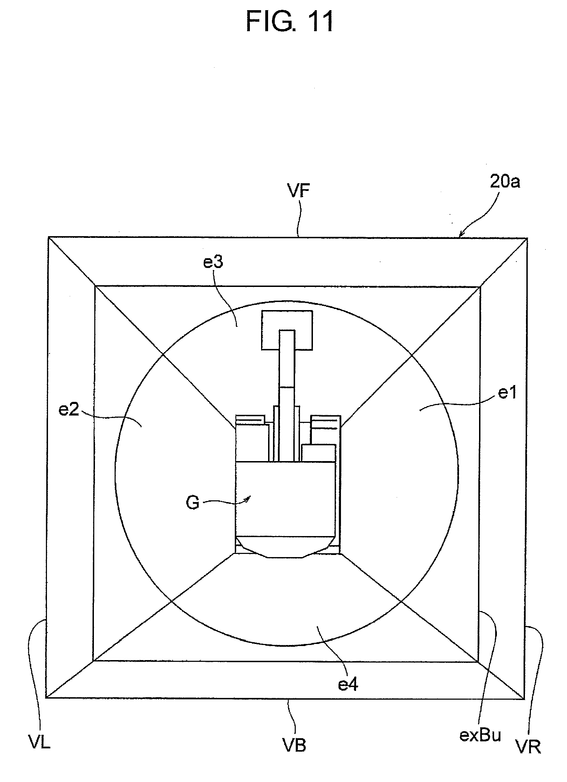

As a result, as shown in Fig. 11, the display of the monitor screen 20a allows to confirm the circumferential safety for the area of the moving locus WA within the maximum reach region Mmax of the front working member 5 as in working surveillance area, while the outside wide area thereof being shown in compressed form as the area out of reach range surveillance zone exBu.

In the foregoing embodiment, the surveillance view image on the monitor screen 20a is shown the plane view images VF, VB, VL and VR around the illustrated picture G, while the illustrated picture G being not necessarily placed at the center position of the monitor screen 20a. In accordance with the nature of work, the forward area of the image should be more widely and the rearward area being narrowed than the forward area. In such a case, the illustration picture G may be removed the indicated position by operating the setting terminal 25.

### Description of Reference Numerals

- 1:: traveling structure
- 3:: swiveling structure
- 4:: operator's cab
- 5:: front working member
- 10:: boom
- 11:: arm
- 12:: bucket
- 13B:: rearward camera
- 13L:: left side camera
- 13R:: right side camera
- 13F:: forward camera
- 20:: monitor device
- 20a:: monitor screen
- 21:: display controller
- 22:: upper view point image creating section
- 23:: overhead view image creating section
- 24:: parameter storage section
- 25:: setting terminal
- VF, VB, VL, VR:: plane view image
- G:: illustrated picture
- Mmax:: maximum reach region
- exBu:: out of reach range surveillance zone
- WA:: moving locus

## Claims

1. Device for monitoring around working machine having a working member connected to a swiveling structure rotatably mounted on a traveling structure, to perform working by the operation of the working member which comprises:
plural number of cameras installed for the swiveling structure, so as to overlap the view field of adjacent two cameras partially with each other;
a view point convertor for converting view point of camera images acquired by respective cameras to upper view point images;
a display image creator to create an overhead view image composed of an illustration of the working machine as plane view, and the upper view point images converted from the converting view point convertor disposed around the illustration; and
an image display device configured to show the overhead view image prepared by the display image creator in the form of a plane view at least within a working reach region to reach the working member for performing work by the working member.

2. Device for monitoring around working machine according to claim 1, wherein respective upper view point images consisting of a overhead view image are projected parallel from upper view point on a level plane at least within the working reach region

3. Device for monitoring around working machine according to claim 2, wherein the image display device is shown a region displaying the plane view limited within a maximum reach position, while region outside of the maximum reach region being a spherical shaped images having a second view point of upper portion of respective camera position.
